# EUROPÄISCHE PATENTSCHRIFT

(11) **EP 3 545 283 B1**
(45) Veröffentlichungstag und Bekanntmachung des Hinweises auf die Patenterteilung: **23.06.2021**
(21) Anmeldenummer: 17794922.9
(22) Anmeldetag: 23.10.2017
(51) Int. Cl.: G01N 15/06, B08B 7/00

(54) **VERFAHREN ZUM BETRIEB EINES SENSORELEMENTS ZUR ERFASSUNG VON PARTIKELN EINES MESSGASES IN EINEM MESSGASRAUM**
METHOD FOR OPERATING A SENSOR ELEMENT FOR DETECTING PARTICLES OF A MEASUREMENT GAS IN A MEASUREMENT GAS CHAMBER
PROCÉDÉ DE FONCTIONNEMENT D'UN ÉLÉMENT CAPTEUR DESTINÉ À DÉTECTER DES PARTICULES D'UN GAZ DE MESURE DANS UNE CHAMBRE DE GAZ DE MESURE

(30) Priorität: 23.11.2016 DE 102016223069
(43) Veröffentlichungstag der Anmeldung: 02.10.2019
(73) Patentinhaber: Robert Bosch GmbH, 70442 Stuttgart (DE)
(72) Erfinder: NOLZ, Daniel, 73098 Rechberghausen (DE)
(86) Internationale Anmeldenummer: PCT/EP2017/076985
(87) Internationale Veröffentlichungsnummer: WO 2018/095670

(56) Entgegenhaltungen:
- US-A1- 2011 109 331
- US-A1- 2011 285 410
- US-A1- 2013 000 678
- US-A1- 2013 002 271

## Beschreibung

### Stand der Technik

Aus dem Stand der Technik ist eine Vielzahl von Sensorelementen zu Erfassung von Partikeln eines Messgases in einem Messgasraum bekannt. Beispielsweise kann es sich bei dem Messgas um ein Abgas einer Brennkraftmaschine handeln. Insbesondere kann es sich bei den Partikeln um Ruß- oder Staubpartikel handeln. Die Erfindung wird im Folgenden, ohne Beschränkung weiterer Ausführungsformen und Anwendungen, insbesondere unter Bezugnahme auf Sensorelemente zur Detektion von Rußpartikeln beschrieben.

Zwei oder mehrere metallische Elektroden können auf einem elektrisch isolierenden Träger angebracht werden. Die sich unter Einwirkung einer Spannung anlagernden Teilchen, insbesondere die Rußpartikel, bilden in einer sammelnden Phase des Sensorelements elektrisch leitfähige Brücken zwischen den beispielsweise als kammartig ineinander greifende Interdigitalelektroden ausgestalteten Elektroden und schließen diese dadurch kurz. In einer regenerierenden Phase werden die Elektroden üblicherweise mit Hilfe eines integrierten Heizelementes freigebrannt. In der Regel werten die Partikelsensoren die aufgrund der Partikelanlagerung geänderten elektrischen Eigenschaften einer Elektrodenstruktur aus. Es kann beispielsweise ein abnehmender Widerstand oder ein zunehmender Strom bei konstanter angelegter Spannung gemessen werden. Nach diesem Prinzip arbeitende Sensorelemente werden im Allgemeinen als resistive Sensoren bezeichnet und existieren in einer Vielzahl von Ausführungsformen, wie z.B. aus DE 103 19 664 A1, DE 10 2006 042 362 A1, DE 103 53 860 A1, DE 101 49 333 A1 und WO 2003/006976 A2 bekannt. Die als Partikel- oder Rußsensoren ausgestalteten Sensorelemente werden üblicherweise zur

Überwachung von Diesel-Partikelfiltern eingesetzt. Im Abgastrakt einer Brennkraftmaschine sind die Partikelsensoren der beschriebenen Art in der Regel in ein Schutzrohr aufgenommen, das gleichzeitig beispielsweise die Durchströmung des Partikelsensors mit dem Abgas erlaubt.

In der regenerierenden Phase oder Regenerationsphase werden die Partikelsensoren vor einer Messung auf beispielsweise ca. 785°C erhitzt. Dadurch wird die mindestens eine Messelektrode, beispielsweise die Interdigitalelektrode (IDE), in einen definierten, vorzugsweise rußfreien, Zustand gebracht, der als Startpunkt einer Partikelmessung dienen kann. Verbleibende Rußreste können eine nachfolgende Messung verfälschen. Eine Herausforderung bei diesem Verfahren besteht jedoch grundsätzlich darin, dass ein Aufheizen der Sensorelemente, insbesondere der Messelektrode, auf die vergleichsweise hohe Temperatur für den Rußabbrand langfristig die Messelektrode, insbesondere eine Platinelektrode, schädigen kann, zumal da diese Messelektrode in der Regel der Atmosphäre ausgesetzt ist.

Weitere Abgassensoren und Verfahren zu deren Betrieb sind aus der US 2013/000 678 A1 und der US 2013/002 271 A1 bekannt.

### Offenbarung der Erfindung

Im Rahmen der vorliegenden Erfindung wird daher ein Verfahren zum Betrieb eines Sensorelements zur Erfassung von Partikeln eines Messgases in einem Messgasraum nach Anspruch 1 vorgeschlagen. Das Sensorelement umfasst einen Träger und mindestens eine mit dem Träger verbundene und dem Messgases aussetzbare Messelektrode, insbesondere mindestens eine Interdigitalelektrode. Das Verfahren umfasst die nachfolgend beschriebenen Verfahrensschritte, welche in der dargestellten Reihenfolge durchgeführt werden. Weiterhin können auch ein oder mehrere Verfahrensschritte oder alle Verfahrensschritte wiederholt durchgeführt werden. Das Verfahren kann über die dargestellten Verfahrensschritte hinaus weitere Verfahrensschritte umfassen. Das Verfahren umfasst die folgenden Schritte:
a) Durchführen einer ersten Regeneration des Sensorelements mit einer ersten Regenerationstemperatur; nachfolgend:
b) Durchführung einer ersten Diagnosemessung an der Messelektrode; und nachfolgend:
c) in Abhängigkeit von einem Ergebnis der ersten Diagnosemessung Durchführung mindestens eines der folgenden Schritte:
   c1) Ausgabe einer Fehlermeldung;
   c2) Durchführen einer Messphase zur Erfassung der Partikel des Messgases; oder
   c3) Durchführen einer zweiten Regeneration des Sensorelements mit einer zweiten Regenerationstemperatur.

Unter einem Sensorelement wird im Rahmen der vorliegenden Erfindung eine beliebige Vorrichtung verstanden, welche geeignet ist, die Partikel qualitativ und/oder quantitativ zu erfassen und welche beispielsweise mit Hilfe einer geeigneten Ansteuereinheit und geeignet ausgestalteten Elektroden ein elektrisches Messsignal entsprechend der erfassten Partikel erzeugen kann, wie beispielsweise eine Spannung oder einen Strom. Bei den erfassten Partikeln kann es sich insbesondere um Rußpartikel und/oder Staubpartikel handeln. Hierbei können DC-Signale und/oder AC-Signale verwendet werden. Des Weiteren kann beispielsweise zur Signalauswertung aus der Impedanz ein resistiver Anteil und/oder ein kapazitiver Anteil verwendet werden. Bezüglich möglicher Ausgestaltungen des Sensorelements kann beispielsweise auf den oben genannten Stand der Technik verwiesen werden. Auch andere Ausgestaltungen sind jedoch möglich.

Das Sensorelement kann insbesondere zum Einsatz in einem Kraftfahrzeug eingerichtet sein. Insbesondere kann es sich bei dem Messgas um ein Abgas des Kraftfahrzeugs handeln. Auch andere Gase und Gasgemische sind grundsätzlich möglich. Bei dem Messgasraum kann es sich grundsätzlich um einen beliebigen, offenen oder geschlossenen Raum handeln, in welchem das Messgas aufgenommen ist und/oder welcher von dem Messgas durchströmt wird. Beispielsweise kann es sich bei dem Messgasraum um einen Abgastrakt einer Brennkraftmaschine, beispielsweise eines Verbrennungsmotors, handeln.

Das Sensorelement umfasst den Träger und die mindestens eine mit dem Träger verbundene und dem Messgas aussetzbare Messelektrode. Die mindestens eine Messelektrode kann insbesondere auf einer Oberfläche des Trägers angeordnet sein oder von einer Oberfläche des Trägers her für das Messgas zugänglich sein. Die mindestens eine Messelektrode kann insbesondere eine Mehrzahl an Messelektroden, beispielsweise mindestens eine erste Messelektrode und mindestens eine zweite Messelektrode, aufweisen. Die Messelektroden können insbesondere mindestens eine Interdigitalelektrode bilden, also eine Struktur von zwei ineinandergreifenden Messelektroden, welche jeweils ineinandergreifende Elektrodenfinger aufweisen. Auch eine andere Anordnung der mindestens einen Messelektrode ist jedoch grundsätzlich möglich.

Unter einem Träger wird im Rahmen der vorliegenden Erfindung grundsätzlich ein beliebiges Substrat verstanden, welches geeignet ist, die mindestens eine Messelektrode zu tragen und/oder auf welches die mindestens eine Messelektrode aufgebracht werden kann. Unter einer Messelektrode wird im Rahmen der vorliegenden Erfindung grundsätzlich ein beliebiger elektrischer Leiter verstanden, der für eine Strommessung und/oder eine Spannungsmessung geeignet ist, und/oder welcher mindestens ein mit den Elektrodeneinrichtungen in Kontakt stehendes Element mit einer Spannung und/oder einem Strom beaufschlagen kann. Unter dem Begriff Elektrodenfinger wird im Rahmen der vorliegenden Erfindung grundsätzlich eine beliebige Ausformung der Messelektrode verstanden, deren Abmessung in einer Dimension die Abmessung in mindestens einer anderen Dimension deutlich überschreitet, beispielsweise mindestens um einen Faktor 2, vorzugsweise mindestens um einen Faktor 3, besonders bevorzugt mindestens um einen Faktor 5. Unter einer Mehrzahl wird im Rahmen der vorliegenden Erfindung grundsätzlich eine beliebige Anzahl von mindestens zwei verstanden.

Die mindestens eine Messelektrode kann insbesondere Platin umfassen und/oder ganz oder teilweise aus Platin bestehen. Auch eine Legierung ist grundsätzlich möglich. Alternativ oder zusätzlich zur Verwendung von Platin können auch andere Metalle zum Einsatz kommen.

Der Träger kann als Trägermaterial mindestens ein keramisches Material umfassen. Insbesondere kann der Träger eine oxidische Keramik, vorzugsweise Aluminiumoxid, insbesondere Al₂O₃, umfassen. Weitere Oxide, beispielsweise Zirkoniumoxid, sind jedoch möglich. Weiterhin kann der Träger mindestens ein elektrisch isolierendes Material umfassen. Der Träger kann eine Trägeroberfläche aufweisen. Unter einer Trägeroberfläche wird im Rahmen der vorliegenden Erfindung grundsätzlich eine beliebige Schicht verstanden, welche den Träger von seiner Umgebung abgrenzt, und auf welche die mindestens eine Messelektrode aufgebracht ist.

Allgemein ist darauf hinzuweisen, dass im Rahmen der vorliegenden Erfindung die Begriffe "erste", "zweite" oder "dritte", sowie entsprechende Abwandlungen davon, als reine Bezeichnungen und Namensgebung verwendet werden, ohne eine Nummerierung zu bezwecken. So können beispielsweise ein erstes Element und ein drittes Element vorhanden sein, ohne dass ein zweites Element zwingend erforderlich ist, oder es kann ein zweites Element vorhanden sein, ohne dass ein erstes Element vorhanden ist, oder es kann ein erstes Element vorhanden sein, ohne dass ein zweites Element oder ein drittes Element vorhanden sind.

Unter einer Regeneration mit einer Regenerationstemperatur wird grundsätzlich im Rahmen der vorliegenden Erfindung eine Aufheizung des Sensorelements oder eines Teils desselben auf die Regenerationstemperatur verstanden, wobei eine oder mehrere Regenerationstemperaturen verwendet werden können, welche fest oder auch variabel sein können. Die mindestens eine Regenerationstemperatur ist dabei derart gewählt, dass die Partikel zumindest teilweise thermisch von der mindestens einen Messelektrode entfernt werden. Insbesondere kann die mindestens eine Regenerationstemperatur oberhalb von 500 °C liegen, beispielsweise in einem Bereich zwischen 500 °C und 1100 °C.

Unter einer Diagnosemessung an der mindestens einen Messelektrode wird im Rahmen der vorliegenden Erfindung eine Messung verstanden, bei welcher mindestens ein Messwert ermittelt wird, der auf einen Zustand der mindestens einen Messelektrode, insbesondere eine Belegung der mindestens einen Messelektrode mit Partikeln, schließen lässt. Insbesondere kann es sich hierbei um mindestens einen elektrischen Messwert handeln, beispielsweise mindestens einen elektrischen Messwert ausgewählt aus der Gruppe bestehend aus einem Strom, einer Spannung oder einem Widerstand. So kann beispielsweise die mindestens eine Messelektrode zwei oder mehr Messelektroden umfassen, und die Diagnosemessung kann beispielsweise eine Widerstandsmessung zwischen den mindestens zwei Messelektroden umfassen oder, alternativ oder zusätzlich, eine Strommessung bei einer vorgegebenen Spannung zwischen den mindestens zwei Messelektroden oder, alternativ oder zusätzlich, eine Spannungsmessung bei einem vorgegebenen Strom zwischen den mindestens zwei Messelektroden. Verschiedene Ausgestaltungen sind möglich und dem Fachmann grundsätzlich bekannt.

Unter einer Durchführung eines oder mehrerer Verfahrensschritte in Abhängigkeit von dem Ergebnis der ersten Diagnosemessung wird allgemein im Rahmen der vorliegenden Erfindung eine bedingte Durchführung des einen Verfahrensschritts oder der mehreren Verfahrensschritte verstanden. Die bedingte Durchführung kann dabei eine oder mehrere Abfragen umfassen, beispielsweise einen Vergleich des mindestens einen Messwerts der Diagnosemessung mit mindestens einem Schwellwert, wobei in Abhängigkeit von einem Ergebnis des Vergleichs Verfahrensschritte gewählt werden.

Unter einer Fehlermeldung wird allgemein im Rahmen der vorliegenden Erfindung ein Signal verstanden, welches es einer das Signal empfangenden Vorrichtung und/oder einer das Signal empfangenden Person ermöglicht, auf das Vorliegen eines Fehlers zu schließen. Das Signal kann beispielsweise ein elektrisches Signal, ein akustisches Signal, ein optisches Signal oder ein haptisches Signal sein oder umfassen. Entsprechend wird unter einer Ausgabe einer Fehlermeldung eine Übermittlung des Signals und/oder eine Bereitstellung des Signals verstanden.

Unter einer Messphase zur Erfassung der Partikel des Messgases wird allgemein ein Vorgang verstanden, bei welchem mindestens eine Messgröße ermittelt wird, welche mit den Partikeln in dem Messgas korreliert. Beispielsweise kann mindestens eine elektrische Messgröße generiert werden, welche auf eine Konzentration der Partikel in dem Messgas schließen lässt. Die Messphase kann insbesondere eine Mehrzahl von Messungen in einer zeitlichen Abfolge umfassen, so dass beispielsweise auch aus einer Messgröße in Form einer Veränderung mindestens eines Messwertes, beispielsweise eines Stroms zwischen mindestens zwei Messelektroden, auf die Partikelkonzentration geschlossen werden kann.

Die zweite Regenerationstemperatur ist erfindungsgemäß höher sein als die erste Regenerationstemperatur. Insbesondere kann die zweite Regenerationstemperatur beispielsweise um mindestens 50 °C, vorzugsweise um mindestens 70 °C, oberhalb der ersten Regenerationstemperatur liegen. Beispielsweise kann die erste Regenerationstemperatur 650-730 °C betragen, insbesondere 690 °C. Weiterhin kann beispielsweise die zweite Regenerationstemperatur 745-825 °C betragen, insbesondere 785 °C. Beispielsweise kann die erste Regenerationstemperatur 690 °C betragen, und die zweite Regenerationstemperatur kann 785 °C betragen. Auch andere Werte sind jedoch grundsätzlich möglich.

Die erste Diagnosemessung kann insbesondere eine Nebenschlussdiagnose zwischen mindestens zwei der Messelektroden umfassen. Unter einer Nebenschlussdiagnose ist allgemein ein Verfahren zu verstehen, bei welchem mindestens ein Messwert generiert wird, der auf einen elektrischen Nebenschluss zwischen den mindestens zwei Messelektroden schließen lässt. Die Nebenschlussdiagnose kann allgemein beispielsweise eine Messung eines Stroms zwischen den mindestens zwei Messelektroden bei einer vorgegebenen Spannung und/oder einen Widerstand zwischen den mindestens zwei Messelektroden umfassen. Auch andere Messwerte sind jedoch grundsätzlich möglich.

in Verfahrensschritt c) wird erfindungsgemäß ein Ergebnis der ersten Diagnosemessung, beispielsweise mindestens ein Diagnosemesswert, mit einem ersten Schwellwert verglichen werden. Der Vergleich kann beispielsweise ganz oder teilweise in Software, beispielsweise mittels einer entsprechenden Softwareroutine, oder auch ganz oder teilweise in Hardware, beispielsweise mittels eines Komparators, durchgeführt werden. Erfindungsgemäß ist vorgesehen, dass Verfahrensschritt c1) durchgeführt wird, wenn das Ergebnis der ersten Diagnosemessung oberhalb des ersten Schwellwerts liegt. Unter einem Ergebnis der Diagnosemessung kann beispielsweise der mindestens eine Diagnosemesswert verstanden werden. Erfindungsgemäß wird, wenn das Ergebnis unterhalb des ersten Schwellwerts liegt, das Ergebnis mit einem zweiten Schwellwert verglichen, welcher niedriger ist als der erste Schwellwert. Beispielsweise kann der Diagnosemesswert mindestens einen Strom zwischen mindestens zwei Messelektroden umfassen, welcher beispielsweise unmittelbar nach der ersten Regeneration bei einer vorgegebenen Spannung gemessen wird. Beispielsweise kann der erste Schwellwert 5 µA betragen, und der zweite Schwellwert kann 2 µA betragen. Auch andere Schwellwerte sind jedoch möglich. Erfindungsgemäß ist vorgesehen, dass, wenn das Ergebnis unterhalb des zweiten Schwellwerts liegt, Verfahrensschritt c2) durchgeführt wird. Erfindungsgemäß ist vorgesehen, dass, wenn das Ergebnis zwischen dem ersten Schwellwert und dem zweiten Schwellwert liegt, Verfahrensschritt c3) durchgeführt wird.

Weiterhin kann das Verfahren derart ausgestaltet werden, dass nach einer Durchführung des Verfahrensschritts c3) folgender Verfahrensschritt durchgeführt wird:
d) Durchführung einer zweiten Diagnosemessung an der Messelektrode.

Das Verfahren kann beispielsweise derart gestaltet werden, dass Verfahrensschritt d) nur durchgeführt wird, wenn das Ergebnis der ersten Diagnosemessung zwischen dem ersten Schwellwert und dem zweiten Schwellwert liegt, beispielsweise nach Durchführung der zweiten Regeneration des Sensorelements.

Das Verfahren kann weiterhin derart durchgeführt werden, dass weiterhin folgender Verfahrensschritt durchgeführt wird:
e) in Abhängigkeit von einem Ergebnis der zweiten Diagnosemessung wird mindestens einer der folgenden Schritte durchgeführt:
e1) Ausgabe einer Fehlermeldung; oder
e2) Durchführen einer Messphase zur Erfassung der Partikel des Messgases.

So kann beispielsweise in Verfahrensschritt e) ein Ergebnis der zweiten Diagnosemessung, beispielsweise ein zweiter Diagnosemesswert, mit einem dritten Schwellwert verglichen werden. Die Durchführung von Verfahrensschritt e1) oder e2) kann beispielsweise in Abhängigkeit von dem Ergebnis dieses Vergleichs durchgeführt werden. Der Vergleich kann wiederum beispielsweise ganz oder teilweise in Software und/oder ganz oder teilweise in Hardware implementiert sein. Verfahrensschritt e1) kann beispielsweise durchgeführt werden, wenn das Ergebnis der zweiten Diagnosemessung, beispielsweise der zweite Diagnosemesswert, oberhalb des dritten Schwellwerts liegt. Verfahrensschritt e2) kann insbesondere durchgeführt werden, wenn das Ergebnis der zweiten Diagnosemessung, beispielsweise der zweite Diagnosemesswert, unterhalb des dritten Schwellwerts liegt. Dabei können der dritte Schwellwert und der erste Schwellwert gleich ausgestaltet werden. Auch ein anderer dritter Schwellwert ist jedoch grundsätzlich möglich.

In einem weiteren Aspekt der vorliegenden Erfindung wird ein Sensor zur Erfassung von Partikeln eines Messgases in einem Messgasraum nach Anspruch 5 vorgeschlagen. Der Sensor umfasst mindestens ein Sensorelement unc mindestens eine mit dem Sensorelement verbundene Steuerung. Das Sensorelement weist einen Träger und mindestens eine mit dem Träger verbundene und dem Messgas aussetzbare Messelektrode auf, insbesondere mindestens eine Interdigitalelektrode. Die Steuerung ist eingerichtet, um ein Verfahren gemäß der vorliegenden Erfindung, beispielsweise gemäß einer oder mehrerer der oben beschriebenen Ausgestaltungen oder gemäß einer oder mehrerer der nachfolgend näher beschriebenen Ausgestaltungen, durchzuführen.

Unter einer Steuerung ist dabei allgemein im Rahmen der vorliegenden Erfindung eine Vorrichtung zu verstehen, welche eingerichtet ist, um einen oder mehrere Vorgänge in einer anderen Vorrichtung zu starten, zu beenden, zu steuern oder zu regeln. Die Steuerung umfasst eine Strommessvorrichtung, eine Spannungsmessvorrichtung und/oder eine Widerstandsmessvorrichtung. Die Steuerung kann beispielsweise einen Mikrocontroller umfassen. Alternativ oder zusätzlich kann die Steuerung jedoch auch andere Hardware umfassen, beispielsweise mindestens eine Hardwarekomponente ausgewählt aus der Gruppe bestehend aus: einem Komparator, einer Stromquelle, einer Spannungsquelle.

Weiterhin umfasst der Sensor eine oder mehrere zusätzliche Komponenten. Das Sensorelement umfasst mindestens eine Heizvorrichtung.

Die Heizvorrichtung kann beispielsweise mindestens einen thermischen Widerstand aufweisen, und der Sensor kann beispielsweise mindestens eine Stromquelle zur Beaufschlagung des thermischen Widerstands mit einem Strom umfassen. Die Steuerung kann beispielsweise mit der Stromquelle verbunden sein, so dass die erste und/oder die zweite Regeneration durch die Steuerung gesteuert werden können.

### Vorteile der Erfindung

Das erfindungsgemäße Verfahren und der erfindungsgemäße Sensor weisen gegenüber bekannten Verfahren und Sensoren zahlreiche Vorteile auf. Insbesondere ist das erfindungsgemäße Verfahren auch bei bestehenden Sensoren leicht zu implementieren, beispielsweise durch eine Änderung einer bestehenden Software. So kann beispielsweise eine Änderung der Betriebsstrategie unter Implementierung des vorgeschlagenen Verfahrens erfolgen, indem eine Software eines Sensorsteuergeräts entsprechend angepasst wird.

Die Erfindung kann insbesondere eine Betriebsstrategie eines Partikelsensors bewirken, welche dazu beiträgt, eine mögliche Anzahl an Regenerationszyklen und somit eine spezifizierbare Lebensdauer des Sensors zu erhöhen. Allgemein kann beispielsweise die erste Regenerationstemperatur niedriger als eine bislang übliche Regenerationstemperatur gewählt werden, beispielsweise unterhalb von 700 °C. Hierdurch kann bei herkömmlichen Sensoren ein Risiko eines sukzessiven Abdampfens von Elektrodenmetall, beispielsweise Platin, gegenüber herkömmlichen Sensoren verringert werden. Dennoch kann durch Nutzung entsprechender Diagnosen ein vollständiger Partikelabbrand gewährleistet werden.

Insgesamt lassen sich mittels der vorliegenden Erfindung beispielsweise Lebensdauern von deutlich mehr als 250.000 km erzielen, was insbesondere im Bereich Nutzfahrzeugbereich von Vorteil ist.

### Kurze Beschreibung der Zeichnung

Weitere optionale Einzelheiten und Merkmale der Erfindung ergeben sich aus der nachfolgenden Beschreibung eines bevorzugten Ausführungsbeispiels, welche in der Figur schematisch dargestellt ist.

Es zeigt:

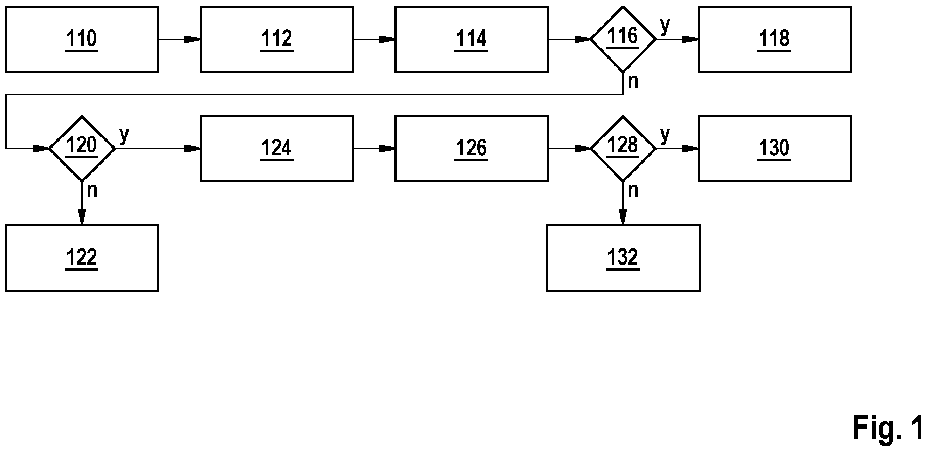

- Figur 1: einen schematischen Ablaufplan eines Ausführungsbeispiels eines erfindungsgemäßen Verfahrens zum Betrieb eines Sensorelements zur Erfassung von Partikeln eines Messgases in einem Messgasraum.

### Ausführungsformen der Erfindung

Nachfolgend wird ein Beispiel eines erfindungsgemäßen Verfahrens zum Betrieb eines Sensorelements beschrieben. Das Sensorelement ist eingerichtet zur Erfassung von Partikeln eines Messgases in einem Messgasraum. Das Verfahren ist in Figur 1 schematisch in Form eines Ablaufplans dargestellt. Exemplarisch kann für ein mögliches Sensorelement, an welchem das Verfahren durchgeführt werden kann und welches erfindungsgemäß betrieben werden kann, auf die Sensorelemente gemäß dem oben genannten Stand der Technik verwiesen werden, beispielsweise DE 103 19 664 A1. Auch andere Sensorelemente sind jedoch grundsätzlich möglich. Zur Ausgestaltung eines erfindungsgemäßen Sensors kann beispielsweise ein derartiges Sensorelement kombiniert werden mit einer entsprechenden Steuerung, auch als Sensorsteuerung bezeichnet. Auch ein Motorsteuergerät kann entsprechend eingerichtet werden.

Das Verfahren umfasst in Schritt 110 eine Anforderung einer ersten Regeneration. Diese wird in Schritt 112 mit einer ersten Regenerationstemperatur durchgeführt, beispielsweise mit 650 °C. Anschließend erfolgt eine Durchführung einer ersten Diagnosemessung in Verfahrensschritt 114 Nebenschlussdiagnose. Als Ergebnis und erster Diagnosemesswert kann beispielsweise bei einer vorgegebenen Spannung von ca. 45 V bis 46 V ein Strom zwischen zwei Messelektroden ermittelt werden. In Verfahrensschritt 116 erfolgt eine Bewertung des Ergebnisses der ersten Diagnosemessung. Der erste Diagnosemesswert wird mit einem ersten Schwellwert verglichen, so dass abgefragt werden kann, ob der erste Diagnosemesswert oberhalb des ersten Schwellwerts, beispielsweise oberhalb von 5 µA, liegt. Ist dies der Fall, was in Fig. 1 mit dem Zweig "y" bezeichnet ist, wird in Verfahrensschritt 118 eine Fehlermeldung ausgegeben. Ist dies nicht der Fall, was in Fig. 1 mit dem Zweig "n" bezeichnet ist, so erfolgt in Verfahrensschritt 120 eine weitere Abfrage.

Allgemein ist dabei im Rahmen der vorliegenden Erfindung bei einem Vergleich mit Schwellwerten und der Abfrage, ob ein bestimmter Wert größer oder kleiner als ein Schwellwert ist, der Schwellwert selbst im einen Bereich oder alternativ dem anderen Bereich zuzuschlagen. Wird beispielsweise abgefragt, ob ein Wert größer ist als ein Schwellwert, so kann dies die Abfrage ">" oder auch "≥" umfassen. Analog kann beispielsweise, wenn abgefragt wird, ob ein Wert kleiner ist als ein Schwellwert, dies die Abfrage "<" oder auch "≤" umfassen. Bei einer Abfrage, ob ein Wert x zwischen zwei Schwellwerten a, b liegt, so kann dies die Abfrage "a < x < b", "a ≤ x < b", "a < x ≤ b" oder "a ≤ x ≤ b" beinhalten.

Bei der weiteren Abfrage in Verfahrensschritt 120 wird erfragt, ob das Ergebnis der ersten Diagnose zwischen einem ersten Schwellwert und einem zweiten Schwellwert liegt. Beispielsweise kann der zweite Schwellwert 2 µA betragen. Ist dies nicht der Fall, in Fig. 1 als Zweig "n" gekennzeichnet, so wird eine Messphase 122 durchgeführt, bei welcher beispielsweise eine Partikelkonzentration bestimmt werden kann. Ist dies hingegen der Fall, liegt also das Ergebnis der ersten Diagnosemessung zwischen dem ersten Schwellwert und dem zweiten Schwellwert, in Fig. 1 mit dem Zweig "y" bezeichnet, so wird in Schritt 124 eine zweite Regeneration mit einer zweiten Regenerationstemperatur, beispielsweise 785 °C, angefordert und durchgeführt.

Anschließend kann in Schritt 126 eine zweite Diagnosemessung erfolgen, welche beispielsweise analog zur ersten Diagnosemessung durchgeführt werden kann. In Verfahrensschritt 128 erfolgt wiederum eine Abfrage, ob das Ergebnis der zweiten Diagnose oberhalb eines dritten Schwellwerts liegt. Der dritte Schwellwert kann beispielsweise gleich dem ersten Schwellwert gewählt werden, also beispielsweise 5 µA. Ist die Abfrage positiv, in Fig. 1 mit dem Zweig "y" gekennzeichnet, liegt also das Ergebnis der zweiten Diagnosemessung oberhalb des dritten Schwellwerts, so kann in Verfahrensschritt 130 beispielsweise eine Fehlermeldung ausgegeben werden. Ist die Abfrage negativ, in Fig. 1 mit dem Zweig "n" gekennzeichnet, liegt das Ergebnis der zweiten Diagnosemessung also unterhalb des dritten Schwellwerts, so kann in Verfahrensschritt 132 beispielsweise eine Messphase durchgeführt werden, welche analog zur Messphase in Verfahrensschritt 122 ausgestaltet sein kann.

Mittels des in Fig. 1 dargestellten Verfahrens lässt sich beispielsweise eine saubere, unverfälschte Partikelmessung gewährleisten. Während bei einstufigen Verfahren, bei welchen lediglich eine einzige Regeneration durchgeführt wird, in der Regel hohe Regenerationstemperaturen verwendet werden, auf welchen das Sensorelement beispielsweise für eine bestimmte Zeit gehalten wird, basiert das vorliegende Verfahren auf einer niedrigen anfänglichen ersten Regenerationstemperatur, welche niedriger ist als die zweite Regenerationstemperatur. Diese Idee beruht auf der Erkenntnis, dass für eine erfolgreiche Regeneration in vielen Fällen niedrige Regenerationstemperaturen bereits ausreichend sind. Die anschließenden Abfragen sowie gegebenenfalls die zweite Regeneration gewährleisten dennoch, dass im Falle einer zu hohen Partikelbelastung nach der ersten Regeneration im Bedarfsfall eine zweite Regeneration angeschlossen werden kann, welche entsprechend intensiver ausgestaltet werden kann. Auf diese Weise kann im Normalfall das Sensorelement geschont werden, wohingegen im Bedarfsfall eine intensivere Regeneration durchgeführt werden kann.

Für die Diagnosemessungen kann nach der vorgeschalteten Regeneration das Sensorelement beispielsweise nicht mehr länger beheizt werden. Das Sensorelement kann dann beispielsweise wieder abkühlen, beispielsweise auf die umgebende Gastemperatur, beispielsweise die umgebende Abgastemperatur. Beispielsweise nach einem Unterschreiten einer vorgegebenen Temperaturschwelle kann eine Messspannung für die Diagnose eingeschaltet werden, und kurz darauf kann eine Nebenschlussdiagnose durchgeführt werden. Die Diagnosemessung kann dann beispielsweise prüfen, ob bereits zu Messbeginn ein messbarer Strom über die eine oder mehreren Messelektroden fließt. Überschreitet bei der ersten Diagnosemessung dieser Strom einen bestimmten ersten Schwellwert, so kann, beispielsweise an einen Fehlermonitor, ein entsprechender Fehler übermittelt werden.

Ein messbarer Strom bereits zu Messbeginn, also unmittelbar nach einer Regeneration, deutet in der Regel darauf hin, dass gegebenenfalls auf der mindestens einen Messelektrode, beispielsweise der Interdigitalelektrode, elektrisch leitfähige Partikel, welche durch die vorangegangene Regeneration nicht abgebrannt werden konnten, angelagert sind. Typischerweise können beispielsweise metallische Verschmutzungen, die einen Nebenschluss von > 5 µA hervorrufen können, durch die Diagnose angezeigt werden.

Bei der erfindungsgemäßen Modifikation der Betriebsstrategie gemäß Fig. 1 kann insbesondere nach wie vor davon Gebrauch gemacht werden, dass beispielsweise bei hohen Regenerationstemperaturen und von 785 °C als zweite Regenerationstemperatur auch unter Extrembedingungen in der Regel immer eine erfolgreiche Regeneration erfolgt. Diese Erkenntnis, in Verbindung mit einer Regenerationskontrolle, kann jedoch ein Ausklammern dieser Extrembedingungen ermöglichen und eine übliche Regenerationstemperatur deutlich herabsetzen. So kann im Normalfall die erste Regeneration mit einer gegenüber der nur im Extremfall durchgeführten zweiten Regeneration deutlich herabgesetzt werden, beispielsweise auf 690 °C. Diese erste Regenerationstemperatur kann insbesondere so gewählt werden, dass sie in etwa 90% der im Feld typischen Betriebspunkte ausreicht, um den auf der mindestens einen Messelektrode befindlichen Belag, beispielsweise Ruß, vollständig abzubrennen. Für eine Anwendung im CV-Bereich kann dies beispielsweise bedeuten, dass die erste Regenerationstemperatur so gewählt wird, dass sie ausreicht, um in einem Betriebspunkt des Motors mit maximaler Abgasgeschwindigkeit eine erfolgreiche Regeneration zu gewährleisten, wobei die Abgastemperatur jedoch noch keinen worst-case darstellt. Bei zeitgleich niedrigen Temperaturen wäre eine Regeneration in diesem Fall in der Regel nicht erfolgreich. Dieser Fall kommt jedoch selten vor, da typischerweise hohe Abgasgeschwindigkeiten, beispielsweise in einem Volllastpunkt, in der Regel mit hohen Abgastemperaturen einhergehen.

Über eine Nebenschlussdiagnose in Schritt 114 kann, beispielsweise zu Beginn einer Messphase, überprüft werden, ob die erste Regeneration erfolgreich gewesen ist und ob ein vollständiger Abbrand des Belags, beispielsweise des Rußes, gegeben ist. Zusätzlich zu der durch den ersten Schwellwert vorgegebenen Grenze von beispielsweise 5 µA kann geprüft werden, ob eine durch den zweiten Schwellwert vorgegebene Grenze von beispielsweise 2 µA überschritten wird. Wird dieser zweite Schwellwert nicht überschritten, so kann die Messphase regulär fortgesetzt werden. Liegt der Diagnosemesswert hingegen zwischen dem ersten Schwellwert und dem zweiten Schwellwert, beispielsweise zwischen 5 µA und 2 µA, so kann in der Regel davon ausgegangen werden, dass die erste Regeneration nicht erfolgreich war und dass sich beispielsweise weiterhin Ruß auf der Interdigitalelektrode befindet. In diesem Fall wird vorzugsweise dem Fehlermonitor kein Fehler übermittelt, sondern es wird die zweite Regeneration mit der vorzugsweise höheren zweiten Regenerationstemperatur durchgeführt, beispielsweise mit 785 °C. Liegt nach der zweiten Regeneration ein Diagnosewert von < 2 µA vor, so wird die Messphase regulär fortgesetzt, ebenso wie wenn der Diagnosewert erneut zwischen 2 µA und 5 µA liegt. Liegt der Diagnosewert hingegen bei einem Wert von > 5 µA, so wird ein entsprechender Fehler an den Fehlermonitor übermittelt.

Diese Darstellung zeigt allgemein, dass die Messphase in den Verfahrensschritten 122, 132 auch ganz oder teilweise identisch sein kann. Weiterhin kann die jeweilige Messphase auch ganz oder teilweise eine Fortsetzung der jeweiligen Diagnosemessungen in den Schritten 114 bzw. 126 sein. So kann beispielsweise eine definierte Anfangsphase einer Messphase als jeweilige Diagnosemessung genutzt werden. Erst bei erfolgreicher Abfrage gemäß den Verfahrensschritten 122, 132 kann dann die Messung als Messphase interpretiert werden, deren Werte Gültigkeit besitzen.

## Patentansprüche

1. Verfahren zum Betrieb eines Sensorelements zur Erfassung von Partikeln eines Messgases in einem Messgasraum, wobei das Sensorelement einen Träger und mindestens eine mit dem Träger verbundene und dem Messgas aussetzbare Messelektrode umfasst, wobei das Verfahren folgende Schritte umfasst:
a) Durchführen einer ersten Regeneration des Sensorelements mit einer ersten Regenerationstemperatur (112); nachfolgend:
b) Durchführung einer ersten Diagnosemessung an der Messelektrode (114); und nachfolgend:
c) in Abhängigkeit von einem Ergebnis der ersten Diagnosemessung Durchführung mindestens eines der folgenden Schritte:
c1) Ausgabe einer Fehlermeldung (118);
c2) Durchführen einer Messphase zur Erfassung der Partikel des Messgases (122); oder
c3) Durchführen einer zweiten Regeneration des Sensorelements mit einer zweiten Regenerationstemperatur (124),
wobei die zweite Regenerationstemperatur höher ist als die erste Regenerationstemperatur, **dadurch gekennzeichnet, dass** in Verfahrensschritt c) ein Ergebnis der ersten Diagnosemessung mit einem ersten Schwellwert verglichen wird (116);
wobei Verfahrensschritt c1) (118) durchgeführt wird, wenn das Ergebnis oberhalb des ersten Schwellwerts liegt, wobei, wenn das Ergebnis unterhalb des ersten Schwellwerts liegt, das Ergebnis mit einem zweiten Schwellwert verglichen wird, welcher niedriger ist als der erste Schwellwert (120), wobei, wenn das Ergebnis unterhalb des zweiten Schwellwerts liegt, Verfahrensschritt c2) (122) durchgeführt wird
wobei, wenn das Ergebnis zwischen dem ersten Schwellwert und dem zweiten Schwellwert liegt, Verfahrensschritt c3) (124) durchgeführt wird.

2. Verfahren nach einem der vorhergehenden Ansprüche, wobei nach einer Durchführung des Verfahrensschritts c3) (124) folgender Verfahrensschritt durchgeführt wird:
d) Durchführung einer zweiten Diagnosemessung an der Messelektrode (126).

3. Verfahren nach dem vorhergehenden Anspruch, wobei weiterhin folgender Verfahrensschritt durchgeführt wird:
e) in Abhängigkeit von einem Ergebnis der zweiten Diagnosemessung wird mindestens einer der folgenden Schritte durchgeführt:
e1) Ausgabe einer Fehlermeldung (130); oder
e2) Durchführen einer Messphase zur Erfassung der Partikel des Messgases (132).

4. Verfahren nach dem vorhergehenden Anspruch, wobei in Verfahrensschritt e) ein Ergebnis der zweiten Diagnosemessung mit einem dritten Schwellwert verglichen wird (128), wobei Verfahrensschritt e1) (130) durchgeführt wird, wenn das Ergebnis oberhalb des dritten Schwellwerts liegt und wobei Verfahrensschritt e2) (132) durchgeführt wird wenn das Ergebnis unterhalb des dritten Schwellwerts liegt.

5. Sensor zur Erfassung von Partikeln eines Messgases in einem Messgasraum, umfassend mindestens ein Sensorelement und mindestens eine mit dem Sensorelement verbundene Steuerung, wobei das Sensorelement einen Träger und mindestens eine mit dem Träger verbundene und dem Messgas aussetzbare Messelektrode umfasst und eine Heizvorrichtung umfasst, wobei die Steuerung eingerichtet ist, um ein Verfahren nach einem der vorhergehenden Ansprüche durchzuführen und eine Strommessvorrichtung, eine Spannungsmessvorrichtung und/oder eine Widerstandsmessvorrichtung, und vorzugsweise auch einen Microcontroller, einen Komparator, eine Stromquelle und/oder eine Spannungsquelle, umfasst.

## Claims

1. Method for operating a sensor element for detecting particles of a measurement gas in a measurement gas chamber, wherein the sensor element comprises a carrier and at least one measuring electrode which is connected to a carrier and can be subjected to the measurement gas, wherein the method comprises the following steps:
a) carrying out a first regeneration of the sensor element at a first regeneration temperature (112); subsequently:
b) carrying out a first diagnostic measurement at the measuring electrode (114); an
d
subsequently:
c) carrying out at least one of the following steps as a function of a result of the first diagnostic measurement:
c1) outputting a fault message (118);
c2) carrying out a measurement phase for detecting the particles of the measurement gas (122); or
c3) carrying out a second regeneration of the sensor element at a second regeneration temperature (124),
wherein the second regeneration temperature is higher than the first regeneration temperature, **characterized in that**
in method step c) a result of the first diagnostic measurement is compared with a first threshold value (116) ;
wherein method step c1) (118) is carried out if the result is above the first threshold value, wherein, if the result is below the first threshold value, the result is compared with the second threshold value which is lower than the first threshold value (120),
wherein, if the result is below the second threshold value, method step c2) (122) is carried out, wherein, if the result lies between the first threshold value and the second threshold value, method step c3) (124) is carried out.

2. Method according to one of the preceding claims, wherein, after method step c3) (124) has been carried out, the following method step is carried out:
d) carrying out a second diagnostic measurement at the measuring electrode (126).

3. Method according to the preceding claim, wherein the following method step is also carried out:
e) carrying out at least one of the following steps as a function of a result of the second diagnostic measurement:
e1) outputting a fault message (130); or
e2) carrying out a measurement phase for detecting the particles of the measurement gas (132).

4. Method according to the preceding claim, wherein in method step e) a result of the second diagnostic measurement is compared with a third threshold value (128), wherein method step e1) (130) is carried out if the result lies above the third threshold value, and wherein method step e2) (123) is carried out if the result lies below the third threshold value.

5. Sensor for detecting particles of a measurement gas in a measurement gas chamber, comprising at least one sensor element and at least one controller which is connected to the sensor element, wherein the sensor element comprises a carrier and at least one measuring electrode which is connected to a carrier and can be subjected to the measurement gas, and said sensor element comprises a heating device, wherein the controller is configured to carry out a method according to one of the preceding claims and comprises a current measuring device, a voltage measuring device and/or a resistance measuring device, and preferably also comprises a microcontroller, a comparator, a power source and/or a voltage source.

## Revendications

1. Procédé permettant de faire fonctionner un élément capteur pour détecter des particules d'un gaz de mesure dans une chambre de gaz de mesure, l'élément capteur comprenant un support et au moins une électrode de mesure reliée au support et pouvant être exposée au gaz de mesure, le procédé comprenant les étapes suivantes consistant à :
a) effectuer une première régénération de l'élément capteur à une première température de régénération (112) ; ensuite :
b) effectuer une première mesure de diagnostic au niveau de l'électrode de mesure (114) ; et ensuite :
c) en fonction d'un résultat de la première mesure de diagnostic, effectuer au moins l'une des étapes suivantes consistant à :
c1) émettre un message d'erreur (118) ;
c2) effectuer une phase de mesure pour détecter les particules du gaz de mesure (122) ; ou
c3) effectuer une deuxième régénération de l'élément capteur à une deuxième température de régénération (124), la deuxième température de régénération étant supérieure à la première température de régénération,
**caractérisé en ce qu'**à l'étape de procédé c), un résultat de la première mesure de diagnostic est comparé à une première valeur seuil (116) ;
l'étape de procédé c1) (118) étant effectuée si le résultat est situé au-dessus de la première valeur seuil, dans lequel, si le résultat est situé au-dessous de la première valeur seuil, le résultat est comparé à une deuxième valeur seuil qui est inférieure à la première valeur seuil (120),
dans lequel, si le résultat est situé au-dessous de la deuxième valeur seuil, l'étape de procédé c2) (122) est effectuée,
dans lequel, si le résultat est situé entre la première valeur seuil et la deuxième valeur seuil, l'étape de procédé c3) (124) est effectuée.

2. Procédé selon l'une quelconque des revendications précédentes, dans lequel, après une exécution de l'étape de procédé c3) (124), l'étape de procédé suivante est effectuée, consistant à :
d) effectuer une deuxième mesure de diagnostic au niveau de l'électrode de mesure (126).

3. Procédé selon la revendication précédente, dans lequel en outre l'étape de procédé suivante est effectuée :
e) en fonction d'un résultat de la deuxième mesure de diagnostic, au moins l'une des étapes suivantes est effectuée, consistant à :
e1) émettre un message d'erreur (130) ; ou
e2) effectuer une phase de mesure pour détecter les particules du gaz de mesure (132).

4. Procédé selon la revendication précédente, dans lequel, à l'étape de procédé e), un résultat de la deuxième mesure de diagnostic est comparé à une troisième valeur seuil (128), l'étape de procédé e1) (130) étant effectuée si le résultat est situé au-dessus de la troisième valeur seuil, et l'étape de procédé e2) (132) étant effectuée si le résultat est situé au-dessous de la troisième valeur seuil.

5. Capteur permettant de détecter des particules d'un gaz de mesure dans une chambre de gaz de mesure, comprenant au moins un élément capteur et au moins un dispositif de commande relié à l'élément capteur, l'élément capteur comprenant un support et au moins une électrode de mesure reliée au support et pouvant être exposée au gaz de mesure, et comprenant un dispositif de chauffage, le dispositif de commande étant aménagé pour effectuer un procédé selon l'une quelconque des revendications précédentes et comprenant un dispositif de mesure de courant, un dispositif de mesure de tension et/ou un dispositif de mesure de résistance, et de préférence également un microcontrôleur, un comparateur, une source de courant et/ou une source de tension.
